**Europäisches Patentamt**

**European Patent Office**

**Office européen des brevets**

(11) Veröffentlichungsnummer : **0 513 406 B1**

(12) **EUROPÄISCHE PATENTSCHRIFT**

(45) Veröffentlichungstag der Patentschrift :
06.07.94 Patentblatt 94/27

(51) Int. Cl.⁵ : **G01B 5/00**

(21) Anmeldenummer : **91107677.6**

(22) Anmeldetag : **11.05.91**

(54) **Positionsmesseinrichtung.**

(43) Veröffentlichungstag der Anmeldung :
**19.11.92 Patentblatt 92/47**

(45) Bekanntmachung des Hinweises auf die
Patenterteilung :
**06.07.94 Patentblatt 94/27**

(84) Benannte Vertragsstaaten :
**AT CH DE FR GB IT LI**

(56) Entgegenhaltungen :
**EP-A- 0 126 888**
**WO-A-89/03506**
**DE-U- 8 509 844**

(73) Patentinhaber : **Dr. Johannes Heidenhain
GmbH
Dr.-Johannes-Heidenhain-Strasse 5
Postfach 1260
D-83292 Traunreut (DE)**

(72) Erfinder : **Nelle, Günther, Dr.-Ing.
Eichenweg 12
W-822 Bergen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Positionsmeßeinrichtung gemäß dem Oberbegriff des Anspruches 1.

Eine derartige Positionsmeßeinrichtung wird insbesondere bei einer Bearbeitungsmaschine zur Messung der Relativlage eines Werkzeugs bezüglich eines Werkstücks eingesetzt.

Bei einer solchen Positionsmeßeinrichtung zum Messen der Relativlage zweier Objekte, beispielsweise zweier Maschinenteile einer Bearbeitungsmaschine, tastet eine mit dem ersten Objekt verbundene Abtasteinheit eine Maßverkörperung ab, die auf einem Trägerkörper angeordnet ist; der Trägerkörper ist seinerseits am zweiten Objekt befestigt.

Während das zweite Objekt in Form des Maschinenteils im allgemeinen aus Grauguß oder Stahl besteht, verwendet man für den Trägerkörper der Maßverkörperung hauptsächlich Aluminium, da sich der Trägerkörper mit seinem - insbesondere bei einer gekapselten Positionsmeßeinrichtung - komplizierten Querschnittsprofil am kostengünstigsten durch Strangpressen herstellen läßt.

Wird nun der Trägerkörper aus Aluminium beispielsweise mittels Schrauben starr am Maschinenteil aus Grauguß oder Stahl befestigt, so kommt es wegen ihrer sehr unterschiedlichen thermischen Ausdehnungskoeffizienten bei Temperaturänderungen, die beim Bearbeitungsvorgang unvermeidlich sind, zu erheblichen Längskräften im Trägerkörper. Diese Längskräfte können undefinierte Verschiebungen des Trägerkörpers in den Schraubverbindungen bewirken, die Nullpunktsverschiebungen der Maßverkörperung und nichtreproduzierbare Spannungen in der Maßverkörperung und damit Meßungenauigkeiten zur Folge haben.

In der DE-OS 28 53 771 ist eine Positionsmeßeinrichtung beschrieben, bei der ein Trägerkörper in Form eines Gehäuses für die Maßverkörperung und die Abtasteinheit an beiden Enden über zwei Befestigungselemente mit einem Maschinenteil verbunden ist. Während das eine Ende des Gehäuses direkt mit dem ersten Befestigungselement verbunden ist, ist zwischen dem anderen Ende des Gehäuses und dem zweiten Befestigungselement ein Längenausgleichselement zur Temperaturkompensation angeordnet, so daß dieses Ende des Gehäuses mit einem translatorischen Freiheitsgrad in Längsrichtung gelagert ist. Diese relativ aufwendige Befestigungsart des Trägerkörpers für die Maßverkörperung am Maschinenteil bedingt zudem, daß der Nullpunkt der Maßverkörperung am Befestigungspunkt des Trägerkörpers am - ersten Befestigungselement liegen muß.

Aus den Druckschriften WO-A-89/03506 und EP-A-0 126 888 sind Meßeinrichtungen bekannt, bei denen mit Hilfe von Dehnstäben, deren thermische Ausdehnungskoeffizienten und Längen auf die Materialien der übrigen Bauelemente abgestimmt sind, temperaturbedingte Längenänderungen ausgeglichen werden.

Ferner ist aus der DE-U-8 509 844 eine Meßeinrichtung bekannt, bei der zwischen der Maßverkörperung und dem Gehäuse ein Zwischenträger angeordnet ist, dessen thermischer Ausdehnungskoeffizient zwischen dem der Maßverkörperung und dem des Gehäuses liegt.

Aus der DE-C- 39 18 490 ist noch eine Maßverkörperung bekannt, die aus einem Grundkörper und aus einem darauf angebrachten Teilungsträger mit einer Teilung besteht und an einem Maschinenteil befestigt wird; der Grundkörper und der Teilungsträger besitzen unterschiedliche thermische Ausdehnungskoeffizienten. Der Teilungsträger wird mit dem Grundkörper durch eine galvanisch abgeschiedene Zwischenschicht kraftschlüssig verbunden und die Querschnitte des Teilungsträgers und des Grundkörpers sind so bemessen, daß der resultierende thermische Ausdehnungskoeffizient der Maßverkörperung gleich dem thermischen Ausdehnungskoeffizienten des Maschienenteils ist.

Der Erfindung liegt die Aufgabe zugrunde, bei einer Positionsmeßeinrichtung der genannten Gattung einen Trägerkörper für die Maßverkörperung zu schaffen, der bei einfachem Aufbau in seinem thermischen Ausdehnungsverhalten dem des zugehörigen Objekts entspricht.

Diese Aufgabe wird erfindungsgemäß durch die kennzeichnenden Merkmale des Anspruches 1 gelöst.

Die mit der Erfindung erzielten Vorteile bestehen insbesondere darin, daß durch die vorgeschlagenen Maßnahmen der Trägerkörper für die Maßverkörperung trotz unterschiedlicher thermischer Ausdehnungskoeffizienten die gleichen temperaturbedingten Längenänderungen wie das zugehörige Object erfährt. Der Trägerkörper mitsamt dem Zusatzträger besitzt somit einen resultierenden thermischen Ausdehnungskoeffizienten, der trotz unterschiedlicher Materialien mit dem thermischen Ausdehnungskoeffizienten des zugehörigen Objects übereinstimmt, so daß temperaturbedingte Meßungenauigkeiten vermieden werden. Da der Trägerkörper und das zugehörige Objekt das gleiche Temperaturverhalten aufweisen, ist die Befestigung der Trägerkörpers an diesem Objekt auf einfache Weise, beispielsweise mittels Schraubverbindungen, problemlos möglich. Zudem kann darüberhinaus der Nullpunkt der Maßverkörperung nach dem jeweiligen Anwendungszweck beliebig gewählt werden.

Vorteilhafte Ausbildungen der Erfindung entnimmt nan den abhängigen Ansprüchen.

Ausführungsbeispiele der Erfindung werden anhand der Zeichnung näher erläutert.

Es zeigen

Figur 1     eine Positionsmeßeinrichtung mit einem ersten Trägerkörper und einem Zusatzträger in einer Längsansicht;

Figur 2     die Positionsmeßeinrichtung nach Figur 1 in einem Querschnitt;

Figur 3     einen zweiten Trägerkörper mit einem Zusatzträger im Querschnitt und

Figur 4     einen dritten Trägerkörper mit einem Zusatzträger im Querschnitt.

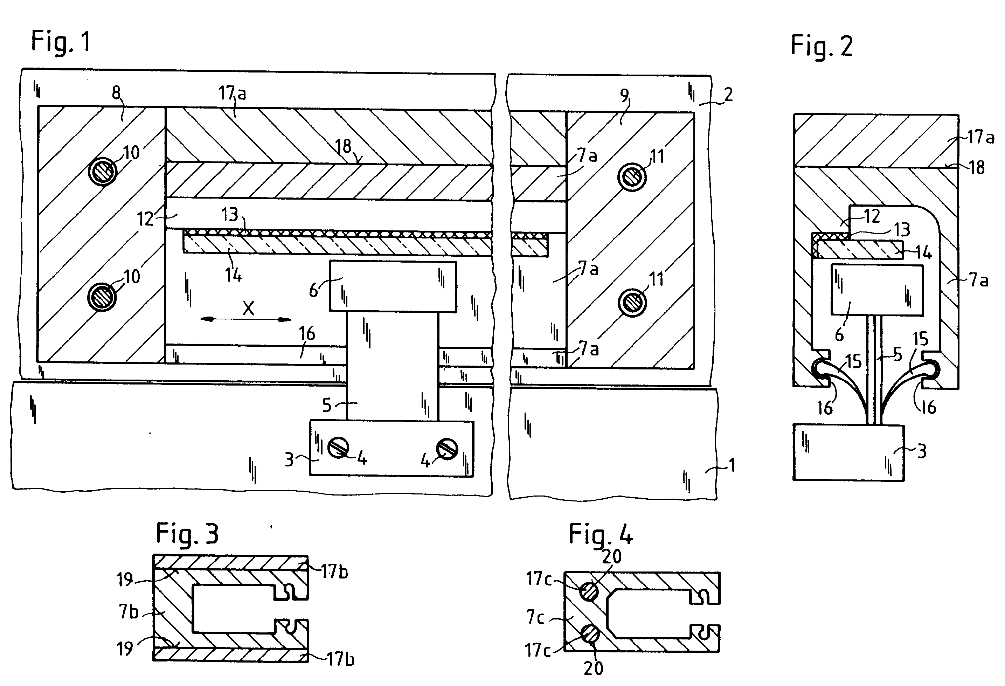

In den Figuren 1 und 2 ist eine gekapselte Positionsmeßeinrichtung zum Messen der Relativlage zweier Objekte 1, 2 in einer Längsansicht und in einem Querschnitt dargestellt. An dem ersten Objekt 1 in Form des Bettes einer nicht dargestellten Bearbeitungsmaschine ist ein Montagestück 3 mittels Schrauben 4 befestigt, das über einen doppelschwertförmigen Mitnehmer 5 mit einer Abtasteinheit 6 verbunden ist.

An dem zweiten Objekt 2 in Form eines Schlittens dieser Bearbeitungsmaschine ist ein Trägerkörper 7a in Form eines im Querschnitt U-förmigen Gehäuses an beiden Enden mittels jeweils eines Befestigungselementes 8, 9 durch Schrauben 10, 11 befestigt; diese beiden Befestigungselemente 8, 9 bilden den stirnseitigen Abschluß der beiden Enden des Trägerkörpers 7a und sind mit diesen in beliebiger, nicht gezeigter Weise fest verbunden.

Im Inneren des Trägerkörpers 7a ist auf einem Innensteg 12 mittels einer Klebeschicht 13 eine Maßverkörperung 14 mit einer Teilung geringfügig in Meßrichtung X verschiebbar angeordnet. Die Teilung der Maßverkörperung 14 wird in bekannter Weise von der Abtasteinheit 6 im Inneren des Trägerkörpers 7a abgetastet; der Mitnehmer 5 für die Abtasteinheit 6 greift durch einen von zwei Dichtlippen 15 verschlossenen Längsschlitz 16 des Trägerkörpers 7a hindurch.

Üblicherweise besteht das zweite Objekt 2 in Form des Schlittens der Bearbeitungsmaschine aus Stahl mit einem thermischen Ausdehnungskoeffizienten $\alpha_{St}$=11 $10^{-6}K^{-1}$ und der Trägerkörper 7a für die Maßverkörperung 14 aus Aluminium mit einem thermischen Ausdehnungskoeffizienten $\alpha_{Al}$=22 $10^{-6}K^{-1}$. Wegen der unvermeidbaren Temperaturänderungen während eines Bearbeitungsvorganges an der Bearbeitungsmaschine erfahren das zweite Objekt 2 und der Trägerkörper 7a aufgrund ihrer unterschiedlichen Ausdehnungskoeffizienten $\alpha_{ST}$, $\alpha_{Al}$ unterschiedliche thermische Längenänderungen, die zu den eingangs geschilderten undefinierten Verschiebungen in den Schraubverbindungen 10, 11 der beiden Befestigungselemente 8, 9 und damit zu Meßungenauigkeiten führen können.

Erfindungsgemäß ist daher der Trägerkörper 7a aus Aluminium an seiner Stirnseite 18 mit einem Zusatzträger 17a aus Invar in Form einer Platte starr verbunden, dessen thermischer Ausdehnungskoeffizient $\alpha_{In}$=1 $10^{-6}K^{-1}$ beträgt und sich vom thermischen Ausdehnungskoeffizienten $\alpha_{Al}$ des Trägerkörpers 7a stark unterscheidet. Diese starre integrierte Verbindung kann auf beliebige Weise, beispielsweise durch Hartkleben, Nieten oder Schrauben, erfolgen.

Nach Maßgabe der beiden thermischen Ausdehnungskoeffizienten $\alpha_{Al}$, $\alpha_{Jn}$ und der beiden Elastizitätsmodule $E_{Al}$, $E_{Jn}$ des Trägerkörpers 7a und des Zusatzträgers 17a werden die Querschnitte $F_{Al}$, $F_{Jn}$ des Trägerkörpers 7a und des Zusatzträgers 17a so bemessen, daß der resultierende thermische Ausdehnungskoeffizient $\alpha_{res}$ des Trägerkörpers 7a mitsamt dem Zusatzträger 17a gleich dem thermischen Ausdehnungskoeffizient $\alpha_{St}$ des zugehörigen zweiten Objekts 2 ist, so daß eine thermische Beeinflussung der Meßgenauigkeiten nicht mehr auftreten kann.

Mit dem Elastizitätsmodul $E_{Al}$=70 $10^3 N/mm^2$ des Trägerkörpers 7a und dem Elastizitätsmodul $E_{Jn}$=145 $10^3 N/mm^2$ des Zusatzträgers 17a ergibt sich bei einem Querschnittsverhältnis $F_{Al}/F_{Jn}$=2 des Trägerkörpers 7a und des Zusatzträgers 17a der resultierende thermische Ausdehnungskoeffizient $\alpha_{res}$ des Trägerkörpers 7a mitsamt dem Zusatzträger 17a:

$$\alpha_{res} = \frac{F_{Al}\,E_{Al}\,\alpha_{Al} + F_{Jn}\,E_{Jn}\,\alpha_{Jn}}{F_{Al}\,E_{Al} + F_{Jn}\,E_{Jn}} = 11{,}3\ 10^{-6}K^{-1},$$

der somit mit dem thermischen Ausdehnungskoeffizienten $\alpha_{St}$=11 $10^{-6}K^{-1}$ des zweiten Objekts 2 recht genau übereinstimmt.

In Figur 3 ist ein zweiter Trägerkörper 7b gezeigt, der mit einem zweiteiligen Zusatzträger 17b an seinen beiden Seitenflächen 19 starr verbunden ist.

Figur 4 zeigt einen dritten Trägerkörper 7c, der in zwei Längsausnehmungen 20 mit einem zweiteiligen Zusatzträger 17c in Form zweier Stangen starr verbunden ist.

Das zweite Objekt 2, der Trägerkörper 7 und der Zusatzträger 17 können auch andere Materialpaarungen aufweisen.

Der einfache Querschnitt des Zusatzträgers 17 gegenüber dem komplizierten Querschnitt des Trägerkörpers 7 erlaubt eine einfache Fertigung dieses integrierten Verbandes aus Trägerkörper 7 und Zusatzträger 17.

**Patentansprüche**

1. Positionsmeßeinrichtung zum Messen der Relativlage zweier Objekte, insbesondere gekapselte Positionsmeßeinrichtung, bei der eine mit dem ersten Objekt verbundene Abtasteinheit eine Maßverkörperung abtastet, die auf einem an dem zweiten Objekt befestigten Trägerkörper angeordnet ist, und bei der der Trägerkörper und das zweite Objekt unterschiedliche thermische Ausdehnungskoeffizienten besitzen, dadurch gekennzeichnet, daß der Trägerkörper (7) mit einem Zusatzträger (17) starr verbunden ist, dessen thermischer Ausdehnungskoeffizient sich vom thermischen Ausdehnungskoeffizienten des Trägerkörpers (7) unterscheidet, und daß die Querschnitte des Trägerkörpers (7) und des Zusatzträgers (17) so bemessen sind, daß der resultierende thermische Ausdehnungskoeffizient des Trägerkörpers (7) mitsamt dem Zusatzträger (17) gleich dem thermischen Ausdehnungskoeffizienten des zugehörigen zweiten Objekts (2) ist.

2. Meßeinrichtung nach Anspruch 1, dadurch gekennzeichnet, daß der Zusatzträger (17) einteilig oder mehrteilig ausgebildet ist.

3. Meßeinrichtung nach Anspruch 1, dadurch gekennzeichnet, daß der Trägerkörper (7a) an seiner Stirnseite (18) mit einem einteiligen Zusatzträger (17a) in Form einer Platte starr verbunden ist.

4. Meßeinrichtung nach Anspruch 1, dadurch gekennzeichnet, daß der Trägerkörper (7b) an seinen beiden Seitenflächen (19) mit einem zweiteiligen Zusatzträger (17b) in Form zweier Platten starr verbunden ist.

5. Meßeinrichtung nach Anspruch 1, dadurch gekennzeichnet, daß der Trägerkörper (7c) in zwei Längsausnehmungen (20) mit einem zweiteiligen Zusatzkörper (17c) in Form zweier Stangen starr verbunden ist.

6. Meßeinrichtung nach Anspruch 1, dadurch gekennzeichnet, daß der Trägerkörper (7) aus Aluminium und der Zusatzträger (17) aus Invar bestehen.

7. Meßeinrichtung nach Anspruch 1, dadurch gekennzeichnet, daß der Trägerkörper (7) aus Kunststoff und der Zusatzträger (17) aus Stahl bestehen.

8. Meßeinrichtung nach Anspruch 1, dadurch gekennzeichnet, daß die starre Verbindung zwischen dem Trägerkörper (7) und dem Zusatzträger (17) durch Schrauben, Nieten oder durch Hartkleben erfolgt.

**Claims**

1. Position-measuring device for measuring the relative position of two objects, especially an encapsulated position-measuring device, in which a scanner unit connected to the first object scans a material measure disposed on a carrier member attached to the second object, and in which the carrier member and the second object have different coefficients of thermal expansion, characterised in that the carrier member (7) is rigidly connected to an additional carrier (17) whose coefficient of thermal expansion differs from that of carrier member (7), and in that the coefficients of thermal expansion, the moduli of elasticity and the cross-sections of the carrier member (7) are co-ordinated to one another in such a way that the resultant coefficient of thermal expansion of the compound of carrier member (7) together with the additional carrier (17) is equal to the coefficient of thermal expansion of the associated second object (2).

2. Measuring device according to claim 1, characterised in that the additional carrier (17) is of one-piece or multiple-piece construction.

3. Measuring device according to claim 1, characterised in that the carrier member (7a) is rigidly connected at its end face (18) to a one-piece additional carrier (17a) in the form of a plate.

4. Measuring device according to claim 1, characterised in that the carrier member (7a) is rigidly connected at both its end faces (19) to a two-piece additional carrier (17b) in the form of two plates.

5. Measuring device according to claim 1, characterised in that the carrier member (7c) is rigidly connected in two longitudinal recesses (20) to a two-part additional carrier (17c) in the form of two rods.

6. Measuring device according to claim 1, characterised in that the carrier member (7) is made of aluminium, and the additional carrier (17) of invar.

7.  Measuring device according to claim 1, characterised in that the carrier member (7) is made of plastics material, and the additional carrier (17) of steel.

8.  Measuring device according to claim 1, characterised in that the rigid connection between the carrier member (7) and the additional carrier (17) is effected by screw attachment, riveting or hard gluing.

## Revendications

1.  Dispositif de mesure de position destiné à la mesure de la position relative de deux objets, notamment dispositif de mesure de position étanche, dans lequel une unité de lecture liée à un premier objet lit une mesure matérialisée disposée sur un support fixé sur le deuxième objet et dans laquelle le support et le deuxième objet présentent des coefficients de dilatation thermique différents, caractérisé par le fait que le support (7) est lié rigidement à un support intermédiaire (17) dont le coefficient de dilatation thermique diffère de celui du support (7) et par le fait que les coefficients de dilatation thermique, les modules d'élasticité et les sections du support (7) et du support intermédiaire (17) sont réciproquement adaptés de manière telle que le coefficient de dilatation thermique résultant de l'ensemble composite formé du support (7) et du support intermédiaire (17) soit égal au coefficient de dilatation thermique du deuxième objet (2) associé.

2.  Dispositif de mesure selon la revendication 1, caractérisé par le fait que le support intermédiaire (17) est monobloc ou en plusieurs parties.

3.  Dispositif de mesure selon la revendication 1, caractérisé par le fait que le support (7a), au niveau de face frontale (18), est lié rigidement à un support intermédiaire (17a) monobloc qui se présente sous la forme d'une plaque.

4.  Dispositif de mesure selon la revendication 1, caractérisé par le fait que le support (7b), au niveau de ses deux faces latérales (19) est lié rigidement à un support intermédiaire (17b) en deux parties qui se présente sous la forme de deux plaques.

5.  Dispositif de mesure selon la revendication 1, caractérisé par le fait que le support (7c), est lié rigidement par deux évidements longitudinaux (20) à un support intermédiaire (17c) en deux parties qui se présente sous la forme de deux tiges.

6.  Dispositif de mesure selon la revendication 1, caractérisé par le fait que le support (7) est en aluminium et le support intermédiaire (17) est en Invar.

7.  Dispositif de mesure selon la revendication 1, caractérisé par le fait que le support (7) est en matière plastique et le support intermédiaire (17) est en acier.

8.  Dispositif de mesure selon la revendication 1, caractérisé par le fait que la liaison rigide entre le support (7) et le support intermédiaire (17) est réalisée par des vis, des rivets ou par colle dure.

Fig. 1

Fig. 2

Fig. 3

Fig. 4

EP 0 513 406 B1